# EUROPEAN PATENT APPLICATION

(11) **EP 1 972 555 A1**
(43) Date of publication of application: **24.09.2008**
(21) Application number: 07425154.7
(22) Date of filing: 19.03.2007
(51) Int. Cl.: B65B 25/04, B65G 59/10

(54) **A separator device for packaging trays, in particular trays for packaging fruit products, a method for separating the trays, and a machine provided with the separator device**

(71) Applicant: B. Longobardi Srl., 39011 Lana (Bolzano) (IT)
(72) Inventor: Longobardi, Robert, 39011 Lana (Bolzano) (IT)
(74) Representative: Gotra, Stefano

(57) **Abstract**

A separator device (1) for trays (5) predisposed in piles (5a) provided on a machine (2) for packing fruit, in particular apples, internally of containing crates (8) comprises means for distancing (24) which act on a tray (5) of a pile (5a) of trays in order to lift an edge of the tray (5) with respect to an adjacent tray (5). The device further comprises means for blocking (33) which can be interposed between the raised edge of the tray (5) gripped by the means for distancing (34) and the pile (5a) of trays (5) in order to hold back the pile (5a) during the displacement of the partially-raised tray towards a rest plane (4a) by special means for transferring of the device.

## Description

The invention relates to a separator device for packaging trays, in particular trays for packaging vegetable and fruit products.

The invention also relates to a method for separating the trays.

The invention also relates to a machine provided with the separator device. The invention also relates to a machine for packing articles provided with the separator device.

The invention applies to the industrial sector of machines, plants and/or devices for processing, treating and packing fruit produce, destined for large-scale distribution.

In particular the invention relates to packing articles of vegetable and fruit and/or fruit produce such as for example moderate-sized fruits of a nearly-spherical type (apples, oranges, mandarin oranges and the like) in special crates.

As is known, packing fruit, and in particular apples, in crates is generally done using special trays made of a flexible material or a non-flexible material (for example wood pulp) provided with a plurality of cells for ordered housing of the fruit to be packed.

Machines are known in which the packing of the apples is done by special machines comprising a combined line advancement system for the fruit, trays and crates, each of which lines is supplied by a respective loading station.

Usually the fruit advancing lines and the celled trays are superposed and converge at a terminal zone of the advancing line of the fruit, so that the fruit is arranged by force of gravity onto the underlying cells of the trays. The advancement line of the trays extends beyond the convergence zone to constitute a further advancement line dedicated to the advancing of the trays filled with the supplied fruit.

Similarly to the above-described structure, the advancement line of the filled trays superposes the advancement line of the containing crates up to a convergence zone corresponding to a terminal zone of the advancement line of the filled trays.

When the filled trays reach the zone of convergence, between the corresponding advancement line and the advancement line of the crates, the trays bearing the fruit are eased into the containing crates, which continue towards an outlet conveyor.

Generally the tray loading station comprises one or more storage feeders-constituted by rest planes on which the trays to be supplied to the machine are piled in an orderly way, one above another in such a way that the cells of each tray lie inside the cells of the underlying tray.

The loading station of the celled trays is further provided with mobile means for transferring one of the trays from one of the piles in the storage between a tray intercept and gripping position and a tray depositing position at which the tray taken from the storage is released onto the advancement line.

Normally the means for transferring use special suction-cup gripping elements connected to a suction network associated to the machine. The sucker gripping elements are positioned on the respective celled tray to be removed and the suction system is activated to cause the adhesion of the tray, which is then fed to the gripping elements.

Although the infeed system, based on the accumulation and removal of the trays from the corresponding storage, enables continuous supply of the trays to the advancement line, the Applicant has noticed that the system is not free of drawbacks and can therefore be improved in some aspects thereof, mainly in relation to the calibration of the gripping force of the means for transferring, as well as the consecutive infeeding of the trays piled in the storage.

In particular, the Applicant has noticed that the means for transferring normally used on machines for fruit packing, such as the one described herein above, are subject to multiple removal of the celled trays piled in the storage. In other words, during the removal stage, in which the activation of the suction system enables a tray to be gripped, the means for transferring raise a group of trays and place it in the corresponding advancement line. This undesired but unfortunately frequent occurrence occurs due both to an excessive packing down of the pile of trays to be infed, and to sticking phenomena localised along the edges of the trays; caused during the production of the trays themselves.

Naturally this multiple removal of the celled trays has a considerable effect on production costs relating to the fruit packing into the crates, as it is necessary to post an operator at the crating section to check on the loading station functioning of the trays during the whole production cycle; the operator intervenes each time that the means for transferring raise two or more trays from the storage, and has to halt the machine in order to separate the sticking trays manually.

The aim of the present invention is to resolve the above-mentioned drawbacks.

A further aim of the invention is to provide a device, a method and a machine in which the removal and consequently the transfer and infeeding of the piled celled trays is single, i.e. is done singly for each tray present in the storage.

The specified technical aim and the set objectives are all substantially attained by a separator device for packaging trays, in particular trays for packaging fruit products, which comprises the characteristics set out in the characterising part of claim 1.

The technical aim is further attained by a method for separating the trays, in particular celled trays for packing vegetable and fruit products, comprising the characteristics expressed in the characterising part of claim 21.

The above technical aim and the set objectives are also attained by a machine for packing articles, in particular vegetable and fruit products comprising the characteristics expressed in claim 27.

Further characteristics and advantages will better emerge from the detailed description that follows of a preferred but not exclusive embodiment of a device and a method for separating trays, in particular trays for fruit products, as well as a machine provided with the device, according to the present invention. The invention will be described herein below with reference to the accompanying figures of the drawings, provided purely by way of non-limiting example, in which:
Figure 1 is a perspective view of a machine for packing articles, in particular fruit articles, provided with a separator device of the trays, according to the present invention;
Figure 2 is a perspective view from the left of the separator device of the preceding figure;
Figure 3 is a perspective view from the right of the separator device of the preceding figures;
Figure 4 is a perspective view from below of the separator device of the preceding figures;
Figure 5 is a schematic view in section of the device of the preceding figures.

With reference to the figures of the drawings, 1 denotes in its entirety a separator device for trays, in particular celled trays for vegetable and fruit products, in agreement with the present invention.

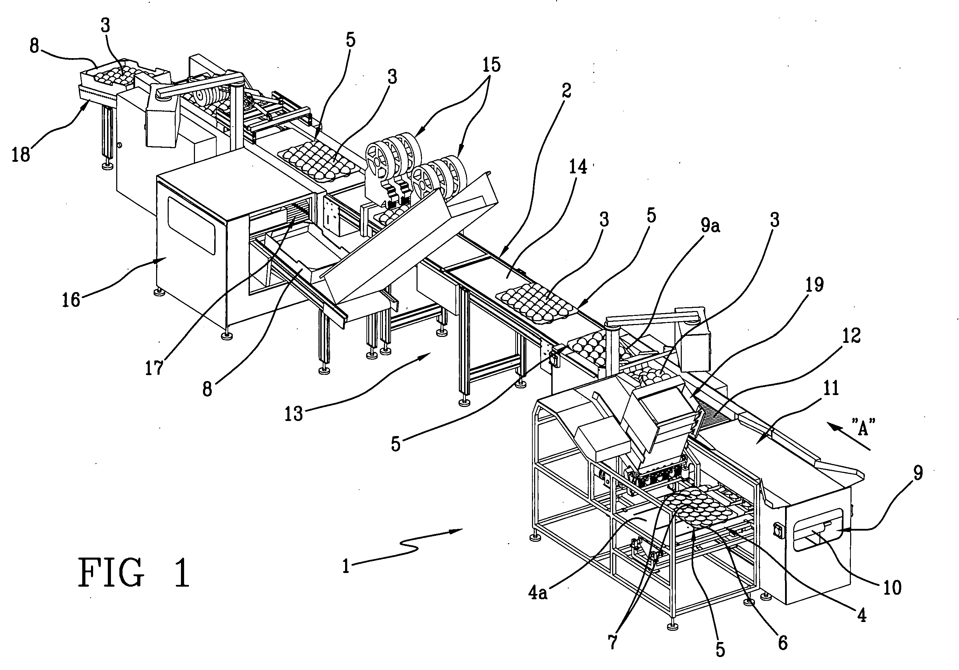

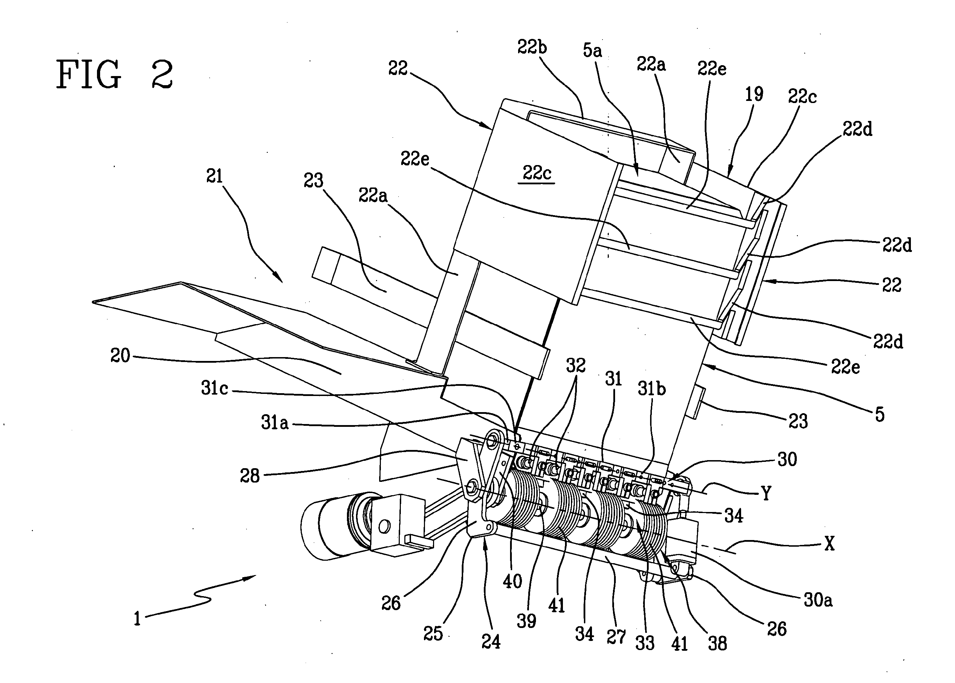

With reference to figure 1, 2 denotes a machine 2 for packing articles 3, in particular vegetables and fruits of overall modest size and being substantially spherical or rounded, such as apples, oranges, mandarin oranges and the like.

The machine 2 comprises a first loading station 4 for infeeding trays 5 each of which exhibits a structure 6 which is substantially flat and at least a cell 7, advantageously a plurality of cells 7, for ordered housing of single vegetables or fruits 3 to be packed in special crates 8.

The first loading station 4 supplies the trays 5 to a first advancement line 9 which extends preferably by a side of the first loading station 4 along a substantially straight direction A which is the advancement direction of the trays 5. Advantageously the first advancement line 9 comprises at least a conveyor belt 10 which extends horizontally along the above-mentioned advancement direction A. Naturally, the first advancement line 9 can be realised using any other conveyor suitable for advancement of the trays 5. The machine 2 comprises a second loading station (not illustrated in the figures of the drawings) which is deputed to supply of the above-mentioned vegetables or fruits 3 (hereinafter referred-to generically as fruits) to be placed in the cells 7 of the trays 5. The second loading station provides a continuous supply of fruits 3 to be packed to a second advancement line 11 which extends preferably in a substantially straight direction, advantageously coinciding with the advancement direction A of the trays 5 along the first advancement line 9. The second advancement line 11 is preferably superposed on the first advancement line 10 so that the fruit articles proceed, substantially parallel, above the trays 5.

In the embodiment illustrated in figure 1, the second advancement line 11 includes the use of a conveyor 12, partially constituted by rollers which develops horizontally above the conveyor belt 10 of the first advancement line 9, to facilitate the advancement of the fruits 3 nudged by the second loading station.

The first and second advancement lines 9, 11, converge to one another along the advancement direction A in order to perform the housing of the fruits 3 in the cells 7 of the trays 5 being supplied.

In particular, the first advancement line 9 exhibits an inclined tract 9a which develops from the belt 10 and terminates approximately at the same level as the roller conveyor 12 of the second advancement-line 11.

In order better to- define the convergence zone of the above-mentioned advancement lines 9, 11, it is preferable that the second advancement line 11 terminates with a sliding portion (not visible in the figures) inclined towards the first advancement line 9, approximately at the inclined tract 9a thereof.

The structural configuration of the convergence zone of the first and second advancement lines 9, 11 determines the raising of the trays 5 and the contemporaneous descent of the fruits 3 which are then orderedly arranged internally of the cells 7 of the trays 5.

Still with reference to figure 1, the machine 2 comprises a first outlet line 13, preferably constituted by a conveyor belt 14 extending from the conveying zone of the first and the second advancement lines 9, 11 along the advancement direction A, for advancing the trays 5 provided with the supplied fruits 3. In greater detail, the first outlet line 13 constitutes a substantially horizontal prolongation of the first advancement line 9 starting from the inclined tract thereof.

Labelling devices 15 are advantageously arranged along the first outlet line 13, which device 15 apply labels on each fruit article 3 on the trays 5; the labels might be for recognition of the produce being packed.

The first outlet line 13 extends beyond the labelling devices 15 by a side of a third loading station 16 dedicated to the supply of the above-mentioned crates 8 of the trays 5.

In particular, the third loading station 16 supplies the crates 8 to a third advancement line 17, also preferably constituted by one or more roller conveyors and extending prevalently along the advancement direction A.

As can be seen in figure 1, the third advancement line 17 develops inferiorly of the first outlet line 13 to enable a substantially parallel advancement of the-crates 8 with respect to the filled trays 5. Downstream of the third loading station 16 the third supply line 17 and the first outlet line 13 converge towards one another to determine the positioning of each filled tray 5 inside a crate 8 coming from the third loading station 16.

In detail, the convergence zone between the first outlet line 13 and the third advancement line 17 is defined by an inclined terminal tract (not visible in the figures of the drawings) which leads the filled trays 5 towards the crates 8 sliding along the third advancement line 17.

A second outlet line 18 extends from the convergence zone of the first outlet line 13 and the third advancement line 17 for advancing the crates 8 with the filled trays 5.

With reference to figures from 2 to 5, the above-mentioned separator device 1 is advantageously associated to the first loading station 4 to provide thereto, and consequently to the first advancement line 9, the trays 5 needed for the packing of the fruit 3.

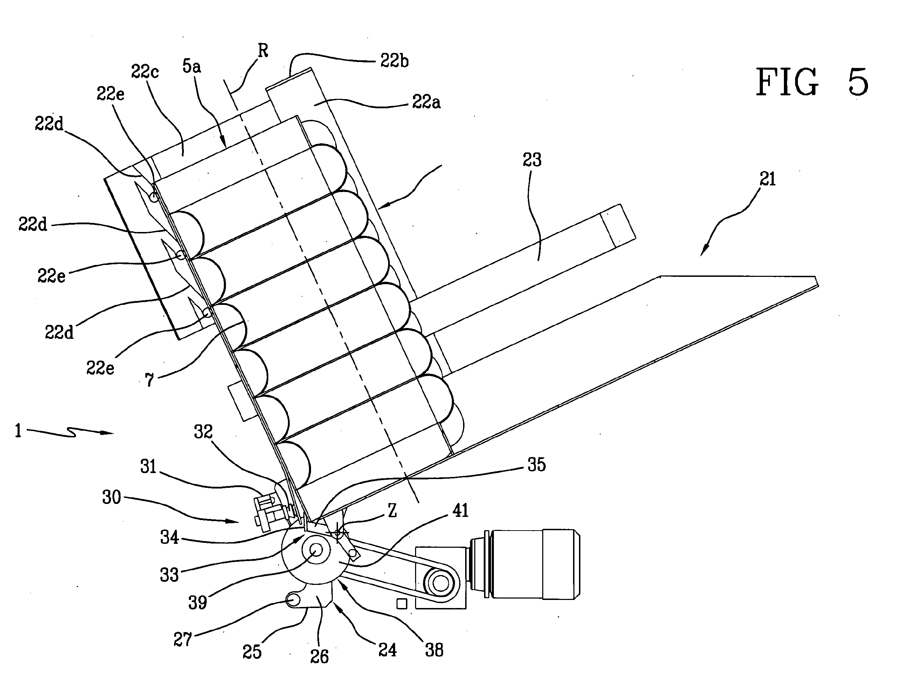

The device 1 is provided with at least a storage feeder 19 for orderedly housing at least a pile 5a of the trays 5, arranged substantially parallel to a reference plane R (figure 5) which is inclined with respect to a horizontal plane. In other words, the trays 5 are arranged obliquely to a horizontal plane, preferably with the celled side facing downwards and towards a rest plane 4a of the first loading station 4.

The device 1 is provided with special means for transferring (not shown in the figures for reasons of clarity) which are operatively associated to the storage feeder 19 for moving at least a tray 5 of the pile 5a onto the rest plane 4a of the first loading station 4. In more detail, the means for transferring are mobile between an intercept position, in which they act for example by means of suitable suction gripping means, on a cell face of the tray 5 to be gripped, and grip the tray, and a second position, in which the removed tray 5 is deposited on the above-mentioned rest plane 4a.

In more detail, the storage feeder 19 comprises a base 20 which is inclined with respect to a horizontal plane, on which rest predetermined lateral sides of the trays 5 to be supplied. The base 20 is provided with a riser surface 21 which extends obliquely upwards from the base 20 on an opposite side to the first loading station 4. The storage feeder 19 further comprises two substantially parallel opposite sides 22 which are preferably perpendicular with respect to the base 20 and which define the containment volume of the storage feeder 19. In detail, the sides of the storage feeder 19 each comprise an upright 22a, connected superiorly to an upright 22a of the opposite side 22 by means of a connecting crossbar 22b and inferiorly fixed to a base 20.

Each side 22 further comprises a lateral side 22c engaged superiorly to the respective upright 22a and provided, interiorly of the storage feeder 19, with a plurality of support seatings 22d for supporting respective containing bars 22e, which can be interpositioned between the sides 22 on the opposite side with respect to the riser surface 12. The storage feeder 19 is advantageously also provided with suitable lateral risers 23 fixed to the uprights 22a of the sides 22 and extending parallel to one another in order to facilitate the insertion of the trays 5 in the storage feeder 19.

To ensure the single displacement of the trays 5 from the storage feeder 19 to the first loading station 4, the device 1 advantageously comprises means for spacing 24 for at least partially separating a tray 5 (the most external facing towards the first loading station 4) from the pile 5a, before the means for transferring intercept.

As can be seen from figures 2 to 5, the means for spacing 24 are operatively arranged at the rest edges of the trays 5 to separate the rest edges of the tray 5 to be transferred from the pile 5a.

The means for distancing 24 preferably comprise at least a frame 25 which can be moved between a rest position, in which the means for distancing 24 do not act on the trays 5, and an operative position (figures from 2 to 5) in which the means for distancing 24 act on the topmost tray 5 in the pile 5a.

The frame 25 is rotatable about a first rotation axis X which is substantially parallel to the reference plane R and perpendicular to the lie plane of the sides 22 of the storage feeder 19. The first axis of rotation X extends preferably in proximity of the base 20 of the storage feeder 19 and in proximity of the rest edges of the trays 5.

Still with reference to figures from 2 to 5, the frame 25 exhibits a pair of support arms 26 which develop substantially parallel to one another at the opposite sides 22 of the storage feeder 19, and which are suitably connected to one another by means of a crossbar 27 extending between the support arms 26.

The rotatable engagement of the frame 25 to the storage feeder 19 is ensured by the hinging of the support arms 26 to respective hinging appendages 28 projecting from the sides 22 of the storage feeder 19 inferiorly of the base 20 thereof.

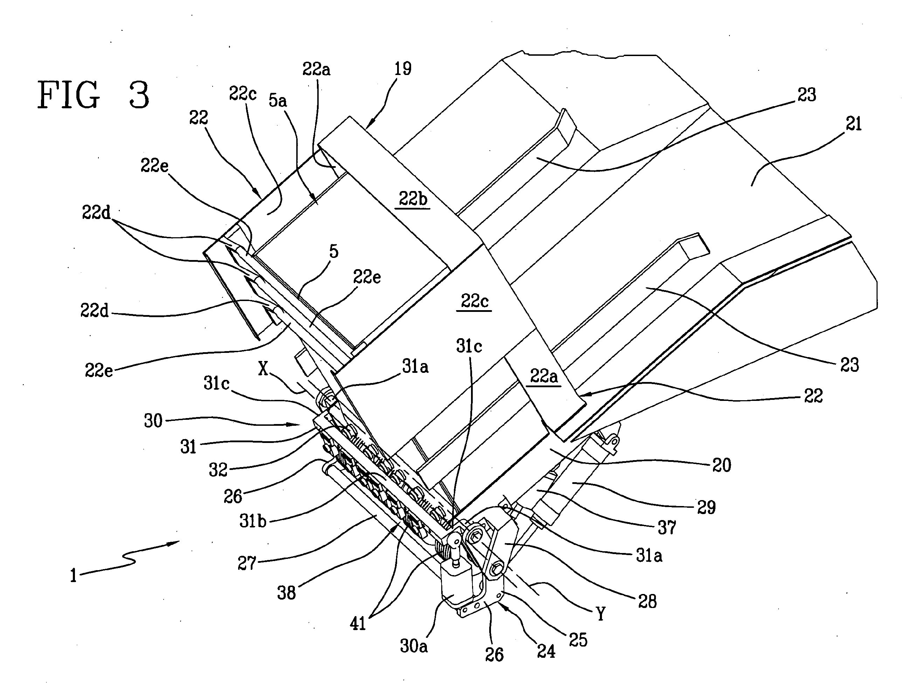

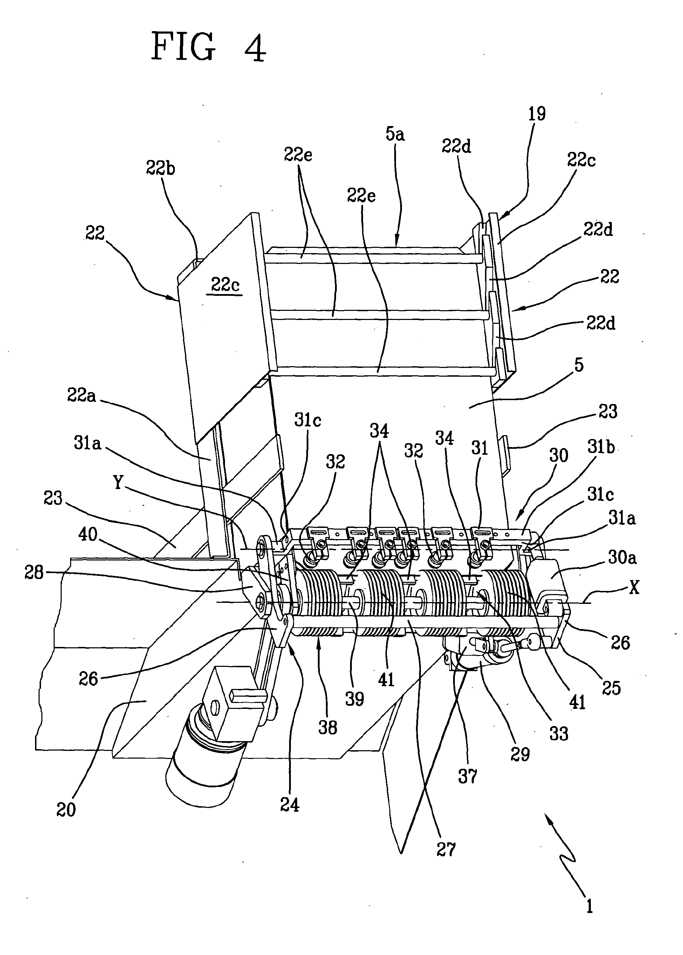

The movement of the means for distancing 24 is achieved by special means for moving 29 (figures 3 and 4), preferably a linear actuator operatively interpositioned between a lower portion of the riser surface 21 of the storage feeder 19 and at least one of the support arms 26 of the frame 25.

The means for distancing 24 further comprise at least a gripping organ 30 which acts on a tray 5 when the frame 25 is in the operative position (figures from 2 to 5). The gripping organ 30 is advantageously mobile between a first position, in which it intercepts and grips the tray 5 to be removed, and a second position, in which it at least partially separates the intercepted tray 5 from the pile, by bending the flat structure 6.

The gripping organ 30 is rotatably engaged to the frame 25 to rotate, about a second rotation axis Y, between the first position, in which the gripped tray 5 lies substantially parallel with respect to the reference plane R and the second position, in which the gripped tray 5 exhibits at least a portion that develops transversally with respect to the reference plane of the tray 5.

In more detail, the gripping organ 30 comprises at least a rod 31 which is rotatably interpositioned between the support arms 26 of the frame 25 on the opposite side from the crossbar 27. The rod 31 develops substantially parallel to the crossbar 27 and the reference plane R of the trays 5. The rod 31 exhibits two hinge ends 31a rotatably engaged to the support arms 26 of the frame 25 and developing along a same direction which coincides with the second rotation axis Y. The rod 31 further exhibits at least a staggered portion 31b connected to the hinge ends 31 a by transversal connection shoulders 31c. The staggered portion 31 b extends in a substantially parallel direction to the development direction of the hinge ends 31a. The gripping organ 30 further comprises at least a gripping element 32, operatively located on the rod, preferably on the staggered portion 31 b of the rod 31, to grip the tray 5 when the frame 25 is in the operative position.

With reference to the embodiment illustrated in the accompanying figures of the drawings, the gripping organ 30 comprises a plurality of gripping elements 32 distributed along the staggered portion 31b of the rod 31, in predetermined positions in relation to the surfaces or gripping points of the trays 5 which are between the cells located at the tray edges.

Each gripping element 32 preferably comprises at least a sucker exhibiting a sucking head which is substantially beaker-shaped and connectable to a centralised suction line which creates a depression when the gripping element rests on a surface of the tray 5 to be gripped.

The movement of the gripping organ 30 is done by means for moving 30a operatively interpositioned between one of the support- arms 26 of the frame and a connecting shoulder 31c of the rod 31.

The device 1 advantageously further comprises means for blocking 33 which can be interposed between the tray 5 engaged and bent by the means for distancing 24 and the trays 5 of the pile 5a in order to hold the trays 5 during the displacement caused by the means for transferring.

In order to act on the pile 5a the means for blocking 33 are mobile between a position of interference, in which the means for blocking 33 are interposed between the tray 5 engaged by the means for distancing 24 and an adjacent tray 5, and a position of non-interference, in which they are distanced from the pile 5a.

The means for blocking 33 are rotatably engaged to the storage feeder 19 in order to rotate about a third axis of rotation Z (figure 5) which is substantially parallel to the axis of reference R and the axes of rotation X,

Y, between the position of interference and the position of non-interference.

The means for blocking 33 advantageously comprise at least a plate-shaped striker element 34 supported to a support arm 35 (figure 5), which support arm 35 is connected to a shaft (not visible in the figures of the drawings) which can be activated in rotation by means for moving 37 in order to define the third rotation axis Z.

With reference to the embodiment of the accompanying figures of the drawings, the means for blocking 33 comprise a plurality of striker elements 34 which are substantially plate-shaped and supported by support arms 35.

In order to amplify and aid the separation of the trays 5 to be transferred from the pile 5a, the means for distancing 24 comprise at least a peeling organ 38 which is operatively active on the rest edges of the trays 5 in the storage feeder 19, which inhibits any sticking between the trays. The peeling organ 38 comprises at least a shaft 39 which is rotatably connected to protuberances 40 of the storage feeder 19 which project inferiorly of the base 20 from opposite sides 22 thereof. The peeling organ 38 can be activated to rotate about a fourth axis of rotation coinciding with the axis of rotation X. The peeling organ 38 comprises at least a cylindrical brush 41, preferably a plurality thereof, keyed on the shaft 39 to rotate together with the shaft 39 about the fourth axis of rotation. Each cylindrical brush 41 exhibits a series of wire-shaped elements (not shown in the figures as of known type) which extend in a distancing direction from the brush 41 and contact the trays 5 on the side of the peeling organ 38. The cylindrical brushes 41 are advantageously distanced from one another along the longitudinal development of the shaft 39, defining spaces through which the striker elements 34 of the means for blocking 33 operate.

The present invention also concerns a method for separating the trays 5 destined to be used to pack the fruits 3.

In particular, the method, preferably actuable via the separator device 1 or the machine 2, consists in predisposing a pile 5a of trays 5, substantially parallel with respect to the plane reference R, in order to transfer the trays 5, preferably consecutively, from the pile 5a to the rest plane 4a of the loading station 4, or possible directly to the first advancement line 9.

Before the transfer of each tray 5 the method includes a stage of at least partially distancing the tray 5 to be transferred with respect to the other trays 5 constituting the pile 5a. The distancing of each tray 5 from the pile 5a is done by distancing the rest edge of each tray 5 topmost on the pile 5a from the other trays 5. The rest edge of the tray 5 is advantageously bent upwards to assume a substantially transversal position with respect to the reference plane R.

Following the distancing-of the rest edge of the tray 5 to be transferred, the remaining trays 5 in the pile 5a are held back, preferably interposing one or more striker elements 34 between the pile 5a and the partially-distanced tray 5.

The separation of the trays 5 disposed at the top of the pile 5a is aided by a stage of peeling the rest edges of the trays 5, which can be done preferably previously to the distancing of the trays 5 to be transferred.

The invention solves the drawbacks encountered in the prior art and achieves the set aims.

The object of the present invention primarily ensures single transfer of the trays piled in the storage. In particular, the combined action of the means for distancing and the means for blocking on the piled trays prevents undesired displacement, by the means for transferring, of groups of trays which can be removed from the pile singly, without dragging adjacent trays with them.

The separator device ensures optimal loading of the trays on the advancement line, considerably reducing the overall costs for packing the fruit, as the invention contributes to the automation of the tray loading station, contemporaneously eliminating unforeseen halts in the production cycle which are normally made in order to enable the operators to intervene in cases of multiple tray transfer.

The obviating of the above drawback of multiple loading of the trays further enables the operator normally charged with controlling the progress of the tray transfer and loading to be freed for other operations in the packing cycle which are more interesting and more useful.

## Claims

1. A separator device for packaging trays, in particular trays for packaging vegetable and fruit products, the device (1) comprising at least a storage feeder (19) for ordered housing of at least a pile (5a) of trays (5) each exhibiting a substantially flat structure (6) and exhibiting at least a cell (7) for housing an article to be packed, the trays (5) being pilable in parallel piles with respect to a predetermined reference plane (R);
means for transferring, operatively associated to the storage feeder (19) for moving a tray (5) of the pile (5a), the means for transferring being mobile between an intercepting position, in which the means for transferring act on a celled surface of a tray (5) and grip the tray (5), and a second position, in which the tray (5) once gripped is deposited on a predetermined rest plane (4a);
**characterised in that** it further comprises means for distancing (24) operatively associated to the storage feeder (19) in order at least partially to separate a tray (5) from the pile (5a) of trays (5) before interception of the means for transferring.

2. The device of claim 1, wherein the means for distancing (24) are operatively arranged at an edge of a tray (5) of the pile (5a) in order to separate the edge from the pile (5a) of trays (5).

3. The device of claim 1 or 2, wherein the means for distancing (5) comprise at least a frame (25) which can be activated to move between a rest position, in which the means for distancing (24) do not act on the trays (5), and an operative position, in which the means for distancing (24) act on a tray (5) of the pile (5a).

4. The device of claim 3, wherein the frame (25) is rotatable about a first axis of rotation (X) which is substantially parallel to the reference plane (R) of the trays (5), the first axis of rotation (X) developing in proximity of a base (20) of the storage feeder (19) and proximity of an edge of the trays (5).

5. The device of claim 4, wherein the frame (25) exhibits a pair of support arms (26) developing substantially parallel to one another at opposite sides (22) of the storage feeder (19) transversal to the base (20), the support arms (26) being reciprocally connected by a crossbar (27) and being hinged at sides (22) of the storage feeder (19) in order to rotate about the first axis of rotation (X) between the rest position and the operative position on command of means for moving (29) operatively interposed between the means for distancing (24) and the storage feeder (19).

6. The device of any one of claims from 3 to 5, wherein the means for distancing (24) comprise at least a gripping organ (30) -acting on a tray (5) of the pile (5a) when the frame (25) is in an operative position, the gripping organ (30) being mobile between a first position, in which it intercepts and grips a tray (5) of the pile (5a), and a second position in which it at least partially separates the tray (5) from the pile (5a).

7. The device of claim 6, wherein the gripping organ (30) is operatively engaged to the frame (25) in order to operate between the first position and the second position.

8. The device of claim 6 or 7, wherein the gripping organ (30) is rotatably engaged to the frame (25) in order to rotate about a second axis of rotation (Y) between the first position, in which the tray (5), gripped, lies substantially parallel to the reference plane (R) and the second position, in which the tray (5), gripped, exhibits at least a portion thereof which develops transversally with respect to the reference plane (R) of the pile (5a) of trays (5).

9. The device of claim 8, when claim 6 depends on claim 5, wherein the gripping organ (30) comprises:
at least a rod (31) rotatably interposed between the support arms (26) of the frame (25) on an opposite side with respect to the crossbar (27), the rod (31) developing substantially parallel to the crossbar (27) and to the reference plane (R) of the trays (5);
at least a gripping element (30) operatively located on the rod (31) in order to grip a tray (5) when the frame (25) is in the operative position.

10. The device of claim 9, wherein the rod (31) exhibits:
two hinge ends (31a) rotatably engaged to the support arms (26) of the frame (25), the hinge ends (31 a) developing along a same direction which coincides with the second axis of rotation (Y);
at least a staggered portion (31 b) connected to the hinge ends (31a) by transversal connecting shoulders (31c), the staggered portion (31b) developing along a substantially parallel direction to the hinge ends (31a) and bearing the at least a gripping organ (30).

11. The device of claim 9 or 10, wherein the gripping organ (30) comprises a plurality of gripping elements (32) distributed along the rod (31) in predetermined positions on the surfaces of the trays (5) which are the cell surfaces of the trays (5).

12. The device of any one of claims from 9 to 11, wherein each gripping element (32) comprises at least a suction cup connected to a centralised suction line, each suction cup exhibiting a substantially beaker-shaped suction head which is positionable on the celled surface of the tray (5) in order to grip the tray (5) with a suction action.

13. The device of any one of the preceding claims, further comprising means for blocking (33) which can be interposed between the tray (5) gripped by the means for distancing (24) and the trays (5) in the pile (5a), in order to hold back the trays (5) in the pile (5a) during a transfer made by the means for transferring.

14. The device of claim 13, wherein the means for blocking (33) are mobile between a position of interference, in which the means for blocking (33) are interposed between the trays (5) gripped by the means for distancing (24) and an adjacent tray (5) of the pile (5a), and a position of non-interference, in which the means for blocking (33) are distanced from the trays (5).

15. The device of claim 14, wherein the means for blocking (33) are rotatably engaged by the storage feeder (19) for rotation about a third axis of rotation (Z) which is substantially parallel to the reference plane (R) of the trays (5) of the pile (5a), in order to rotate between the position of interference and the position of non-interference.

16. The device of any one of claims from 13 to 15, wherein the means for blocking (33) comprise at least a striker element (34) which is plate-shaped and supported by a respective support arm (35), the support arm (35) being connected to a shaft which is rotatable by means for moving (37) to define the third axis of rotation (Z).

17. The device of any one of claims from 13 to 15, wherein the means for blocking (33) comprise at least a plurality of substantially plate-shaped striker elements (34) which are support by respective support arms (35), each support arm (35) being connected to a shaft which is rotatable by means for moving (37) to define the third axis of rotation (Z).

18. The device of any one of claims from 5 to 17, wherein the means for distancing (24) comprise at least a peeling organ (38) which is operatively active on an edge of the at least a tray (5) of the pile (5a) in order to prevent a sticking of the at least a tray (5) to another, adjacent tray (5) of the pile (5a).

19. The device of claim 18, wherein the peeling organ (38) comprises:
at least a shaft (39) which is rotatably connected at opposite sides (22) of the storage feeder (19) and rotatably about a fourth axis of rotation which is substantially parallel to the reference plane (R) of the trays (5);
at least a cylindrical brush (41) keyed on the shaft (39) to rotate together with the shaft (39) about the fourth axis of rotation, the at least a cylindrical brush (41) exhibiting wire-shaped elements which extend in a distancing direction from the brush to strike the trays (5) on a side of the peeling organ (38).

20. The device of any one of claims from 5 to 19, wherein the reference plane (R) of the trays (5) develops transversally with respect to a horizontal plane, the trays (5) being disposed obliquely with the celled surface thereof facing in a downwards direction and being held by at least a containing bar (22e) developing between the opposite sides (22) of the storage feeder (19).

21. The method for separating the trays (5), in particular celled trays for packing fruit produce, the method comprising stages of:
predisposing at least a pile (5a) of trays (5), substantially parallel to a predetermined reference plane (R) and each exhibiting a substantially flat structure (6) and at least a cell (7) for receiving an article to be packed; displacing at least a tray (5) of the pile (5a) to at least a predetermined rest plane (4a),
**characterised in that** it comprises a stage of at least partially distancing a tray (5) from the pile (5a) before moving the tray (5) between the pile (5a) and the rest plane (4a).

22. The method of claim 21, wherein the distancing of the at least a tray (5) from the pile (5a) comprises distancing an edge of the tray (5) to be transferred from an adjacent tray (5).

23. The method of claim 22, wherein the distancing of the edge of the at least a tray (5) to be transferred comprises a bending of an edge of the at least a tray (5).

24. The method of any one of claims from 20 to 23, wherein it further comprises a stage of holding back the trays (5) of the pile (5a) with respect to the tray (5) which has been distanced, before displacing the tray (5) from the pile (5a) to the rest plane (4a).

25. The method of claim 24, wherein the holding back of the trays (5) of the pile (5a) is achieved by interpositioning at least a, and preferably a plurality of, striker element (34) between the distanced tray (5) and adjacent trays (5).

26. The method of any one of claims from 20 to 25, wherein it further comprises a stage of peeling a tray (5) to be removed from the pile (5a) before displacing the tray (5) from the pile (5a) to the rest plane (4a).

27. A machine (2) for packing articles (3), in particular vegetable and fruit produce, comprising:
a first loading station (4) for supplying trays (5) each exhibiting a substantially flat structure (6) and exhibiting at least a cell (7) for housing an article to be packed;
at least a first advancement line (9) of the trays (5) supplied by the first loading station (4);
a second loading station for supplying articles (3) to be placed on the trays (5);
a second advancement line (11) of the articles (3) supplied by the second loading station, the first advancement line (9) and the second advancement line (11) converging towards each other in order to determine a housing of the articles (3) in the tray (5);
a first outlet line (13) extending from a conveying zone constituted by the advancement lines (9, 11), for advancing the trays (5) housing the articles (3);
a third loading station (16) for supplying containing crates (8) for the trays (5);
a third advancement line (17) of the crates (8) supplied by the third loading station (16), the third advancement line (17) and the first outlet line (13) converging towards one another in order to place each tray (5) provided with the articles (3) internally of a respective crate (8);
a second outlet line (18) for advancing the crates (8) with the trays (5),
**characterised in that** the first loading station (4) is provided with the separator device (1) for trays (5) according to any one of claims from 1 to 20.
